# EUROPEAN PATENT APPLICATION

(11) **EP 2 378 412 A1**
(43) Date of publication of application: **19.10.2011**
(21) Application number: 11162878.0
(22) Date of filing: 18.04.2011
(51) Int. Cl.: G06F 9/40, G06Q 10/00

(54) **Computing system and method for distributed and engaging software services**

(30) Priority: 19.04.2010 US 325780 P
(71) Applicant: Barrie, Robert Mathew, Double Bay NSW 2028 (AU); Williams, Darren Nicholas John, Camperdown NSW 2050 (AU); Harrison, David, Strathfield NSW 2135 (AU); Phillips, Peter, Forest Lodge NSW 2037 (AU)
(72) Inventor: Barrie, Robert Mathew, Double Bay NSW 2028 (AU); Williams, Darren Nicholas John, Camperdown NSW 2050 (AU); Harrison, David, Strathfield NSW 2135 (AU); Phillips, Peter, Forest Lodge NSW 2037 (AU)
(74) Representative: Williams, Ceili

(57) **Abstract**

A method and apparatus for engaging, on behalf of a client computing device, one or more remote computing devices to perform a client directed task for a fee. The method comprising the steps of: receiving, from a client computing device, data indicative of a task to be performed; reviewing capabilities of the remote computing devices; selecting one or more suitable remote computing devices for performing at least a first subtask; negotiating, and reaching agreement, with selected remote computing devices on terms for performing the first subtask; verifying receipt of payment from a client, being associated with the client computing device; dispatching the first subtask; receiving a first result, from respective remote computing device; and providing payment to a remote provider, being associated with the remote computer device.

## Description

### FIELD OF THE INVENTION

The present invention relates to distributed computing, and in particular to distributed computing that involves engaging one or more associate computers to assist in completing a task.

The invention has been developed primarily for use as an apparatus and method for a computing device to engage a plurality of associate computers to perform selected sub-tasks and will be described hereinafter with reference to this application. However, it will be appreciated that the invention is not limited to this particular field of use.

### BACKGROUND OF THE INVENTION

Any discussion of the prior art throughout the specification should in no way be considered as an admission that such prior art is widely known or forms part of the common general knowledge in the field.

The nature of business is changing. As businesses increasingly engage outsourced services for meeting their needs - management, procurement and delivery of services are becoming decentralized. In this new business environment, there is a need for infrastructure that can facilitate sourcing, buying and selling services more efficiently.

The market for online services is highly fragmented. To complete a task, or receive a service, one or more service providers must typically be engaged. To engage online service providers, the service provider must be located, the service negotiated (including pricing), otherwise evaluate the providers work product, verify results and make payment. Furthermore, a buyer of services must typically contact each provider individually, evaluate their qualifications and negotiate specifications, availability and price. As a result, comparison shopping across and negotiation with services providers have traditionally been time-consuming, inefficient and costly.

Services are typically performed on the basis of a custom order, and each end product is unique. The process of creating and delivering a product or service can be complicated by the buyer having to negotiate price and verify that the work parameters of the project are met and develop a work product that meets particular specifications. Further, a lowest cost provider of services may not be selected due to other considerations, such as quality of the service provider's work product, reputation and delivery date.

In relation to providing services, it will be appreciated that computers can perform tasks that are easily expressed by simple algorithms. In each, a computer processor uses simple algorithms to do the processing. Computer development has been directed toward improving algorithms used by computer processors to complete various tasks that have been desirable but difficult to automate, increasing the performance capabilities of the computer processors themselves, and optimizing computer architectures by using multiple computer processors.

Many tasks can be represented such that a computer can perform the tasks substantially autonomously, once instructed. Performing a more complex task can often be achieved by segmenting the desired task to sub-tasks.

The fragmentation of the traditional market for online services, in combination with selective automatic or autonomous computer provided services being offered online, has therefore created a strong need for methods and apparatuses that can facilitate access to service providers and their services in an efficient manner.

### OBJECT OF THE INVENTION

It is an object of the present invention to overcome or ameliorate at least one of the disadvantages of the prior art, or to provide a useful alternative.

It is an object of the invention in its preferred form to provide methods or apparatuses to engage a plurality of associate computers to perform selected sub-tasks for payment.

### SUMMARY OF THE INVENTION

According to an aspect of the invention there is provided a method for a service computing device to engage, on behalf of a client computing device, one or more remote computing devices to perform at least one client directed task for a fee. The method comprises the steps of:
(a) receiving, from a client computing device, data indicative of at least one tasks to be performed;
(b) reviewing capabilities of the remote computing devices;
(c) selecting one or more suitable remote computing devices for performing at least a first subtask;
(d) receiving payment from a client, being associated with the client computing device;
(e) dispatching the first subtask;
(f) receiving a first result, from respective remote computing device; and
(g) providing payment to a remote provider, being associated with the remote computer device.

According to an aspect of the invention there is provided a method for a service computing device to engage, on behalf of a client computing device, one or more remote computing devices to perform at least one client directed task for a fee. The method comprises the steps of:
(a) receiving, from a client computing device, data indicative of a task to be performed;
(b) reviewing capabilities and/or reputation of the remote computing devices;
(c) selecting one or more suitable remote computing devices for performing at least a first subtask;
(d) negotiating, and reaching agreement, with selected remote computing devices on terms for performing the first subtask;
(e) verifying receipt of payment from a client (associated with the client computing device);
(f) dispatching the first subtask;
(g) receiving a first result, from respective remote computing device; and
(h) providing payment to the remote provider (associated with the remote computer device).

Preferably, the method further comprises the step of: receiving, from a client computing device, a selection of a first remote computing device from the one or more suitable remote computing devices to performing first sub task. More preferably, the method further comprises the step of: receiving, from a client computing device, authorization for dispatching the first sub-task to the first remote computing device. Most preferably, the first sub-task being dispatched to the first remote computing device.

Preferably, reviewing capabilities and/or reputation of the remote computing devices includes interrogating a local reputation database. Alternatively, reviewing capabilities and/or reputation of the remote computing devices includes interrogating a remote reputation database. More preferably, reviewing capabilities and/or reputation of the remote computing devices can includes interrogating a predefined application program interface (API).

Preferably an initial deposit payment can be received from the client before receiving data indicative of a task to be performed. More preferably, this initial payment can be refunded if there is a failure to reach agreement. Most preferably, receipt of payment is verified before dispatching a respective subtask.

Preferably, the step of negotiating and reaching agreement can be conducted prior to receiving data indicative of a task to be performed. More preferably, this advance negotiation can pre-establish a set fee in respect of a task and/or subtask.

Preferably, providing payment to the remote provider (associated with the remote computer device) is performed after deducting a fee for the intermediation provided by the service computing device.

Preferably, selecting suitable remote computing devices includes comparing a measure indicative of reputation. More preferably, the measure indicative of reputation is updated upon each completion of a subtask.

Preferably, results are verified before providing payment. More preferably, a verification routine provides feedback for updating a measure indicative of reputation of a respective remote computing device.

Preferably, payment is received from a client before negotiating, and reaching agreement, with selected remote computing devices. More preferably, the received payment, from the client, maintains a client account in credit.

According to an aspect of the invention there is provided an apparatus comprising a service computing device adapted to engage one or more remote computing devices to perform selected sub-tasks for payment, the service computing device comprising:
a storage medium having stored therein a plurality of programming instructions that are machine executable, wherein when executed, said instructions operate to perform the steps according to a method as herein described.

According to an aspect of the invention there is provided an apparatus comprising a service computing device adapted to engage one or more remote computing devices to perform selected sub-tasks for payment, the service computing device comprising:
a storage medium having stored therein a plurality of programming instructions that are machine executable, wherein when executed, said instructions operate to:
   (a) receiving, from a client computing device, data indicative of a task to be performed;
   (b) identifying, automatically and under control of the service computing device, at least a first subtask of the task;
   (c) identifying one or more required capabilities for performance of the first subtask;
   (d) selecting a first remote computing device, having the required capabilities for performing the first subtask;
   (e) negotiating terms, with the first remote computing device, for performing the first subtask;
   (f) accepting terms, with the first remote computing device, for performing the first subtask;
   (g) dispatching the first subtask to the first remote computing device;
   (h) receiving a first subresult, generated by performance of the first subtask by first remote computing device;
   (i) providing payment of a first fee to the first remote computing device for the performance of the first subtask; and
   (j) generating a result for the task based, at least in part, on the first subresult.

Preferably, providing payment of a first fee to the first remote computing device for the performance of the first subtask is performed after deducting a fee for the intermediation provided by the service computing device.

According to an aspect of the invention there is provided a method for a service computing device to engage one or more remote computing devices to perform selected subtasks for a fee, the method comprising the steps of:
(a) receiving, from a client computing device, data indicative of a task to be performed;
(b) identifying, automatically and under control of the service computing device, at least a first subtask of the task;
(c) identifying one or more required capabilities for performance of the first subtask;
(d) selecting a first remote computing device, having the required capabilities for performing the first subtask;
(e) negotiating terms, with the first remote computing device, for performing the first subtask;
(f) accepting terms, with the first remote computing device, for performing the first subtask;
(g) dispatching the first subtask to the first remote computing device;
(h) receiving a first subresult, generated by performance of the first subtask by first remote computing device;
(i) providing payment of a first fee to the first remote computing device for the performance of the first subtask; and
(j) generating a result for the task based, at least in part, on the first subresult.

Preferably, providing payment of a first fee to the first remote computing device for the performance of the first subtask is performed after deducting a fee for the intermediation provided by the service computing device.

According to an aspect of the invention there is provided a method for a service computing device to engage one or more remote computing devices to perform selected subtasks for a fee, the method comprising the steps of:
(a) receiving, from a first client computing device, data indicative of a task to be performed;
(b) identifying, automatically and under control of the service computing device, at least a first subtask of the task;
(c) posting the first subtask;
(d) receiving, from a first remote computing device, an offer to complete the first subtask;
(e) accepting terms, with the first remote computing device, for performing the first subtask;
(f) dispatching the first subtask to the first remote computer system;
(g) receiving a first subresult, generated by performance of the first subtask by first remote computing device;
(h) providing payment of a first fee to the first remote computing device for the performance of the first subtask; and
(i) generating a result for the task based, at least in part, on the first subresult.

Preferably, providing payment of a first fee to the first remote computing device for the performance of the first subtask is performed after deducting a fee for the intermediation provided by the service computing device;

According to an aspect of the invention there is provided a method for a remote computing device to engage with a computing device to perform a selected subtask for a fee, the method comprising the steps of:
(a) reviewing data, posted by a service computing device, indicative of a first subtask;
(b) transmitting, to the service computing device, an offer to complete the first task;
(c) accepting terms, with the service computing device, for performing the first subtask;
(d) receiving assignment of the first subtask;
(e) autonomously performing at least part of the first subtask;
(f) transmitting a first subresult, generated by performance of the first subtask;
   and
(g) receiving payment of a first fee for the performance of the first subtask.

Preferably, accepting terms with the first remote computing device, includes identifying one or more required capabilities for performance of the first subtask. More preferably, accepting terms with the first remote computing device, includes verifying capabilities of the first remote computing device. Most preferably, accepting terms with the first remote computing device, includes restricting receipt of offers to a select subset of remote computing devices pre-recognised as possessing the required capabilities for performance of the first subtask.

Preferably, selecting a first remote computing device is based on past quality information. More preferably, past quality information can include any one or more of the set comprising: quality of past work product, past product turn-around time and reputation defined as by others.

Preferably, the task is automatically decomposed into one or more subtasks by the service computing device

Preferably, a plurality of subtasks is identified, automatically and under control of the service computing device. More preferably, negotiating terms, accepting terms, dispatching any one or more of the plurality of subtasks, receiving a first subresult providing payment can be steps take in relation to a second remote computing device. Most preferably, the same subtask can be dispatched to the first remote computing device and the second remote computing device.

Preferably, the first subresult is verified prior to providing payment of a first fee. More preferably, verification is performed by an verification routine that verifies all of the first subresult. Alternatively, verification is performed by a verification routine that performs a probabilistic based authentication. Alternately, verification is performed by a verification routine that performs classification based verification.

Preferably, the first subtask is performed by the first remote computer as a plurality of micro-tasks. More preferably, receiving a first subresult includes receiving a plurality of micro-results. Each micro-result is preferably verified upon receipt. Most preferably, payment of a first fee includes a plurality of micro-payment being a partial payment of a total fee associated with the first subtask.

Preferably, the first subresult can be a micro-result being a partial result of the first subtask. More preferably, a micro-result is verified upon receipt. Most preferably, payment of a first fee is a micro-payment being a partial payment of a total fee associated with the first subtask.

Preferably, the method comprises the step of: verifying a first subresult. More preferably, verifying a first subresult can include, dispatching the first subtask to two or more remote computers, identifying a majority received subresult to the first task, selecting the majority received subresult as the first subresult for the first subtask. Alternatively, verifying a first subresult can include, dispatching the first subtask wherein the first task has a predetermined subresult, comparing a subresult from a remote computer with the predetermined subresult, and rejecting all subresults from the remote computer if the subresult does not match the predetermined subresult. Preferably, the service computing device further comprises a verification module for verifying the first subresult, or micro-results thereof.

The service computing device preferably further comprises a payment control module for providing payment of a first fee to the first remote computing device. Control payment can preferably include an escrow payment. Preferably, providing payment can include providing micro-payments for respective verified micro-results of the first subresult. Alternatively providing payment can include providing micro-payments for respective verified micro-results of the first subresult after deducting a fee for the intermediation provided by the service computing device. More preferably, providing payment is terminated for a non-verified first subresult, or micro-results thereof. Most preferably, acceptance of the first remote computing device, and associated first subresults is withdrawn upon the first subresult (or micro-results thereof) being unable to be verified.

According to an aspect of the invention there is provided an application programming interface (API) interface for a processor device, the processor device being adapted to engage, on behalf of a client computing device, one or more remote computing devices to perform a client directed task for a fee. The interface comprising: a control program adapted to:
(a) receiving, from a client computing device, data indicative of a task to be performed;
(b) reviewing capabilities and/or reputation of the remote computing devices;
(c) selecting one or more suitable remote computing devices for performing at least a first subtask;
(d) negotiating, and reaching agreement, with selected remote computing devices on terms for performing the first subtask;
(e) verifying receipt of payment from a client (associated with the client computing device);
(f) dispatching tasks (typically as a plurality subtasks);
(g) receiving a first result, from respective remote computing device; and
(h) providing payment to a remote provider (associated with the remote computer device) after deducting a fee for the intermediation provided by the control program.

According to a further aspect of the invention there is provided a computer program product stored on a computer usable medium, the computer program product being adapted to provide a method for a remote computing device to engage one or more computing device to perform a client directed task for a fee, as herein described.

According to a further aspect of the invention there is provided a computer readable medium for operation with a processor device to enable a remote computing device to engage with one or more computing devices to perform a client directed task for a fee, the computer readable medium comprising computer code for executing a method as herein described.

According to a further aspect of the invention there is provided a computer program product stored on a computer usable medium, the computer program product adapted to provide an application programming interface (API) interface for a computing device, the computing device being adapted to receive data indicative of a task directed by a client computing device, the computing device being coupleable to database having one or more records indicative of remote computing devices; the computer program product comprising:
computer readable program means for performing steps of a method as herein described.

### BRIEF DESCRIPTION OF THE DRAWINGS

A preferred embodiment of the invention will now be described, by way of example only, with reference to the accompanying drawings in which:
- FIG 1: is a schematic view of a computing device within distributed computing apparatus according to the invention;
- FIG 2: is a flowchart of a method for a computing device to engage one or more remote computing devices to perform selected subtasks;
- FIG 3: is a flowchart of a method for a computing device to engage one or more remote computing devices to perform selected subtasks;
- FIG. 4: shows a flowchart of a method for a remote computing device to engage with a computing device to perform a selected subtask;
- FIG 5: is a flowchart of an embodiment method for a service computing device to engage one or more remote computing devices to perform a client directed task for a fee.

### PREFERRED EMBODIMENT OF THE INVENTION

A computing apparatus including a central co-ordinating computing device and one or more remote computing devices provided to perform (or complete) a predetermined set of subtasks, allowing the co-ordinating computing device to perform (or complete) a client requested tasks.

In one embodiment, the co-ordinating computing device decomposes a task, into subtasks for human performance and/or computer performance, and programmatically requests the performances, using an application programming interface (API) of the present invention. In response, the central coordinating server dispatches one or more of the subtasks to one or more of the remote computing devices adapted to perform on or more of the subtasks, for example by way of the Internet.

Remote computing device perform the requested subtasks and provide a results back to the coordinating computing device. The coordinating computing device receives responses corresponding to the subtasks, and generates a result for the task based at least in part on the subtasks.

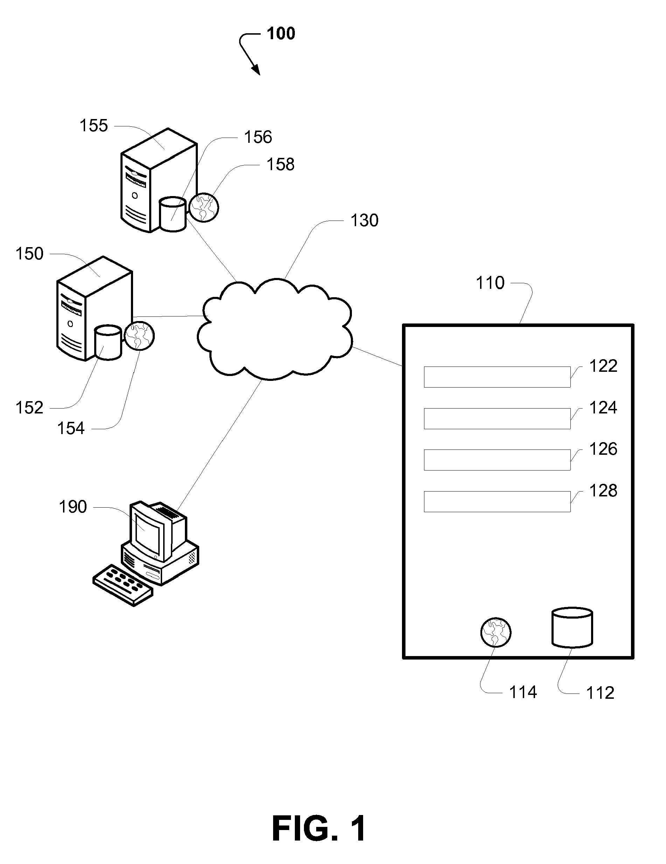

FIG. 1 shows a schematic view of distributed computing apparatus 100 having a computing device 110 coupled to a data network 130. The computing device is adapted to engage, via the data network, one or more remote computing devices (150,155) to perform selected subtasks for a fee.

It is understood that a result, sub-result, or micro-result, by way of example can include the null result.

In an embodiment, the computing device 110 comprises a task module 122. The task module 122 provides a portal (or front end) to the computing device 110 for engage, via the data network, one or more remote computing devices (150,155) to perform selected subtasks for a fee. A function of the task module 122 is to decompose a client task to into manageable (potentially many) subtasks to be performed by remote computing devices.

In an embodiment, the task module 122 can be distributed across multiple computing platforms, but accessible to a client computing device 190 for providing a task, by way of a data 130 network. In an alternate embodiment, the task module 122 can be co-resident with the client 190.

It will be appreciated that subtasks are represented in a form indicative of that can be perform by a remote computing device. A task or problem is broken down into smaller subtasks that may be performed (or solved) by a computer, for example collating email addresses, providing web links meeting set criteria, and/or categorising web sites.

Decomposition of a task into subtasks may be performed automatically by a task decomposition module 124 or manually by an operator (not shown). Such task decomposition application may decompose a task in any one of a number application dependant manner. Preferably, the manner in which such task decomposition decomposes a task is client configurable and/or selectable. That is, task decomposition application is equipped with a number of ways to decompose a task, and the client may specify which of the available options is to be employed.

It will be understood that data can be indicative of any one or more information element selected from the set comprising: description, required skills and or capabilities, budget, maximum duration, and any supporting attachments, files, or documentation.

In an embodiment, data indicative of the subtasks to be performed are stored in a database 112 and posted via a web server 114. Data associated with a subtask is externally available to one or more remote computing devices (for example 150 and 158), via a data network 130 (for example the Internet and/or local area network).

In an embodiment, the computing device 110 comprises a verification module 126 for verifying a subresult, or micro-results thereof, provided by one or more remote computing devices (for example 150 and 158).

In an embodiment, the computing device 110 comprises a payment control module 128 for providing payment of a fee to a remote computing device (for example 150 and 158). Payment can include an escrow payment. Escrow payments can be maintained though a third party computer. Providing payment can also include providing micro-payments for respective verified micro-results of a subresult. Providing payment can be terminated for a non-verified subresult, or micro-results thereof. Further, acceptance of the remote computing device, and associated subresults, can be withdrawn upon the subresult (or micro-results thereof) being unable to be verified.

It will be appreciated that the computing device 110, serves as the central coordinating computer which manages and posts subtasks and receives and verifies subresults. If a remote computing device is available, a subtask can be assigned. Subresults, (including any micro-results) can be received across a communication link between interfaces 114 and 154 (or 158) via a data network 130. Once subresults are received, (and preferably verified or authenticated) then based - at least in part - on one or more subresults, a result to the task can be generated. The result can be provided to the client 190.

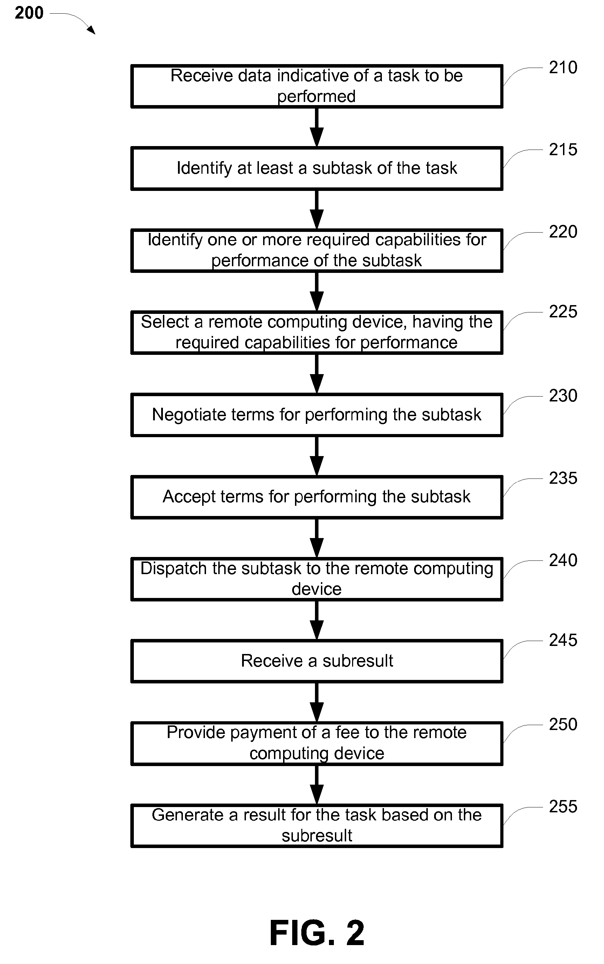

FIG. 2 shows a flowchart of an embodiment method 200 for a computing device (for example 110 of FIG. 1) to engage one or more remote computing devices (for example 150 or 155 of FIG. 1) to perform selected subtasks for a fee. This method comprises the steps of:
STEP 210: receiving, from a client computing device (for example 190 of FIG. 1), data indicative of a task to be performed;
STEP 215: identifying, automatically and under control of the computing device, at least a subtask of the task;
STEP 220: identifying one or more required capabilities for performance of the subtask;
STEP 225: selecting at least a remote computing device, having the required capabilities for performance;
STEP 230: negotiating terms, with the remote computing device, for performing the subtask;
STEP 235: accepting terms, with the remote computing device, for performing the subtask;
STEP 240: dispatching the subtask to the remote computing device;
STEP 245: receiving a subresult, generated by performance of the subtask by remote computing device;
STEP 250: providing payment of a fee to the remote computing device for the performance of the subtask; and
STEP 255: generating a result for the task based, at least in part, on the subresult.

In an embodiment, by way of example only, an initial deposit payment can be received from the client before receiving data indicative of a task to be performed. This initial payment can be refunded if there is a failure to reach agreement.

In an embodiment, by way of example only, the step of negotiating and reaching agreement can be conducted prior to receiving data indicative of a task to be performed. This advance negotiation can pre-establish a set fee in respect of a task and/or subtask.

In an embodiment, by way of example only, a fee for the intermediation provided by the service computing device can be deducted from any payment to the remote provider (associated with the remote computer device).

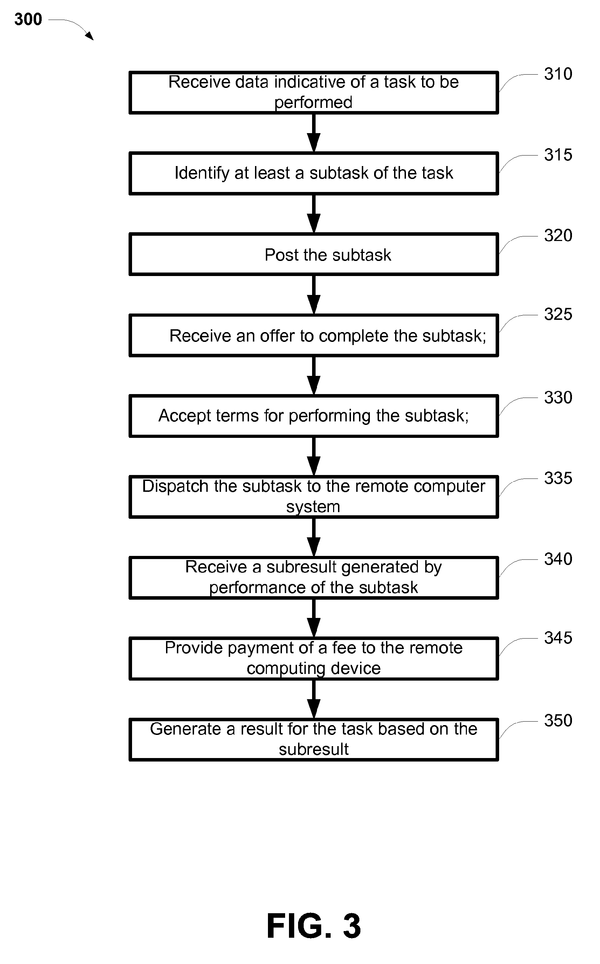

FIG. 3 shows a flowchart of an alternative embodiment method 300 for a computing device (for example 110 of FIG. 1) to engage one or more remote computing devices (for example 150 or 155 of FIG. 1) to perform selected subtasks for a fee. This method comprises the steps of:
STEP 310: receiving, from a client computing device (for example 190 of FIG. 1), data indicative of a task to be performed;
STEP 315: identifying, automatically and under control of the computing device, at least a subtask of the task;
STEP 320: posting the subtask;
STEP 325: receiving, from a remote computing device, an offer to complete the subtask;
STEP 330: accepting terms, with the remote computing device, for performing the subtask;
STEP 335: dispatching the subtask to the remote computer system;
STEP 340: receiving a subresult, generated by performance of the subtask by remote computing device;
STEP 345: providing payment of a fee to the remote computing device for the performance of the subtask; and
STEP 350: generating a result for the task based, at least in part, on the subresult.

In an embodiment, the method (200 or 300) further comprises the step of: verifying a subresult. By way of example, verifying a subresult can include, dispatching the subtask to two or more remote computers, identifying a majority received subresult to the task, selecting the majority received subresult as the subresult for the subtask. Alternatively, verifying a subresult can include, dispatching the subtask wherein the task has a predetermined subresult, comparing a subresult from a remote computer with the predetermined subresult, and rejecting all subresults from the remote computer if the subresult does not match the predetermined subresult. In such an embodiment, the computing device comprises a verification module for verifying the subresult, or micro-results thereof.

In an embodiment, control payment can include an escrow payment. Providing payment can include providing micro-payments for respective verified micro-results of the subresult. Typically, providing payment is terminated for a non-verified subresult, or micro-results thereof. Acceptance of the remote computing device, and associated subresults is typically withdrawn upon the subresult (or micro-results thereof) being unable to be verified. In such an embodiment, the computing device can further comprise a payment control module for providing payment of a fee to the remote computing device.

In an embodiment, a micro-result may consist of only one of many data records required to complete a subresult. Verification and payment can be made on each micro-result. The ongoing acceptance of a remote computer can be dependant on continuous verification of micro-results.

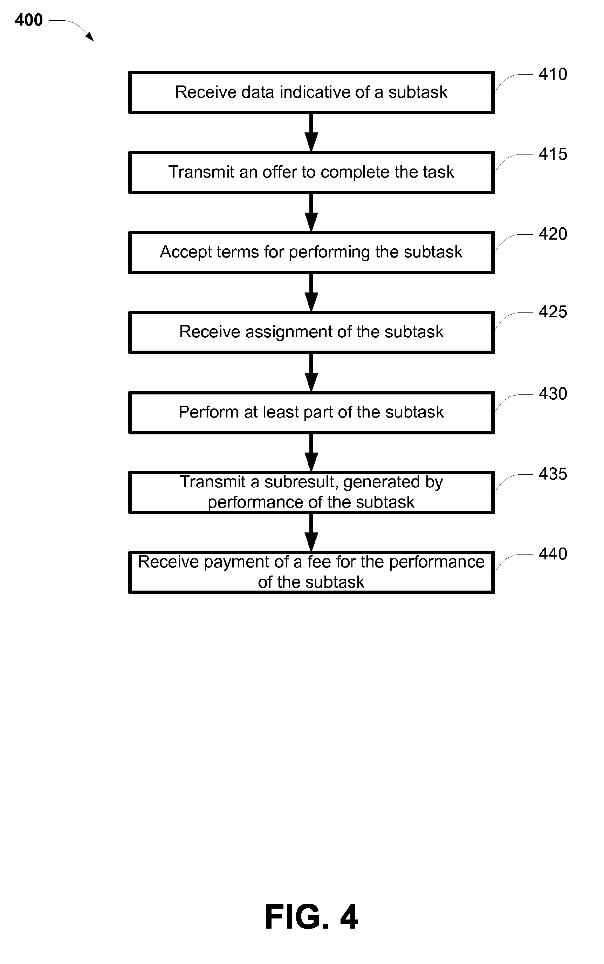

FIG. 4 shows a flowchart of an embodiment method 400 for a remote computing device (for example 150 or 155 of FIG. 1) to engage with a computing device (for example 110 of FIG. 1) to perform a selected subtask for a fee. This method comprising the steps of:
STEP 410: receiving and/or reviewing data, posted by a computing device, indicative of a subtask;
STEP 415: transmitting, to the computing device, an offer to complete the task;
STEP 420: accepting terms, with the computing device, for performing the subtask;
STEP 425: receiving assignment of the subtask;
STEP 430: autonomously performing at least part of the subtask;
STEP 440: transmitting a subresult, generated by performance of the subtask; and
STEP 445: receiving payment of a fee for the performance of the subtask.

In an embodiment, accepting terms with the remote computing device can include identifying one or more required capabilities for performance of the subtask. Accepting terms with the remote computing device, can further include verifying capabilities of the remote computing device. Accepting terms with a remote computing device, can also include restricting receipt of offers to a select subset of remote computing devices pre-recognised as possessing the required capabilities for performance of the subtask.By way of example, selecting a remote computing device is based on past quality information. Typically, past quality information can include any one or more of the set comprising: quality of past work product, past product turn-around time and reputation defined as by others.

It will be understood that capabilities can include any one or more of the following: skills, experience, availability, or resources required for completion of the task.

It will be understood that terms can include any one or more of the following: pricing, time constraints, or requirements in relation to the performance of the task, or the results to be returned.

It will be appreciated that a plurality of subtasks can be identified, automatically and under control of the computing device. Negotiating terms, accepting terms, dispatching any one or more of the plurality of subtasks, receiving a subresult providing payment can be steps take in relation to another remote computing device. By way of example, the same subtask can be dispatched to a plurality of remote computing devices.

In an embodiment, the subresult is verified (or authenticated) prior to providing payment of a fee. Typically, verification can be performed by a verification routine that verifies all of the subresult. Alternatively, verification can be performed by a verification routine that performs a probabilistic based verification. Alternately, verification can be performed by a verification routine that performs classification based verification.

In an embodiment, a subtask can be performed by a remote computer as a plurality of corresponding micro-tasks. By way of example, receiving a subresult can include receiving a plurality of corresponding micro-results. Preferably, micro-results can be individually verified upon receipt. As such, payment of a fee can include a plurality of micro-payment being a partial payment of a total fee associated with the subtask.

By way of example, a subresult can be a micro-result being a partial result of the subtask. Preferably, a micro-result is verified upon receipt, and payment of a fee is a micro-payment being a partial payment of a total fee associated with the subtask.

In an embodiment, a first application programming interface (API) is provided to enable applications on a remote computer (for example 150 or 155 of FIG. 1) to interact with, and access features provided by a computing device (for example 110 of FIG. 1).

In an embodiment, a second application interface (API) is provided to enable applications on a client computer (for example 190 of FIG. 1) to interact with, and access features provided by a computing device (for example 110 of FIG. 1).

It will be appreciated that, utilising the first and/or second API, tasks can be generated, work allocated, and notification provided as a result for the task completed. For example, the API can accept data as URL encoded key value pairs. Client and/or remote computer verification can be account based employing key-verification methods. Security can be provided by using an encrypted communication link, such as over SSL.

By way of example, results (including subresults and/or micro-results) can be verified using a set of known results. These known results can be used to verify results received and/or train remote computing devices and/or train a classifier bases verification module. Tasks (or subtasks) having known results items can be mixed with tasks (or subtask) having unknown results (or subresults).

It will be appreciated that, if a remote computer provides results not consistent with a known result, an error response can be issued, thereby providing training feedback.

In an embodiment, by way of example only, results are verified before providing payment. A verification routine can provides feedback for updating a measure indicative of reputation of a respective remote computing device. A 'bidirectional' feedback can be provided in respect of both the service provider (associated with the remote computing device) and client (associated with the client computing device). Based on the conformity between the results (or subresults) provided and the known results (or subresults), a confidence score can be calculated. Deciding to accept the results (or subresults) can be based on the calculated confidence score.

It will be appreciated that the illustrated method and apparatus can engage a plurality of associate computers to perform selected sub-tasks for payment. It will be appreciated that the illustrated method and apparatus can provide a marketplace for software hiring software. By way of example, software can connect to post a job, and software on the other side can bid for available jobs.

### Further Examples

By way of example only, a service computing device can engage, on behalf of a client computing device, one or more remote computing devices to perform a client directed task for a negotiated fee.

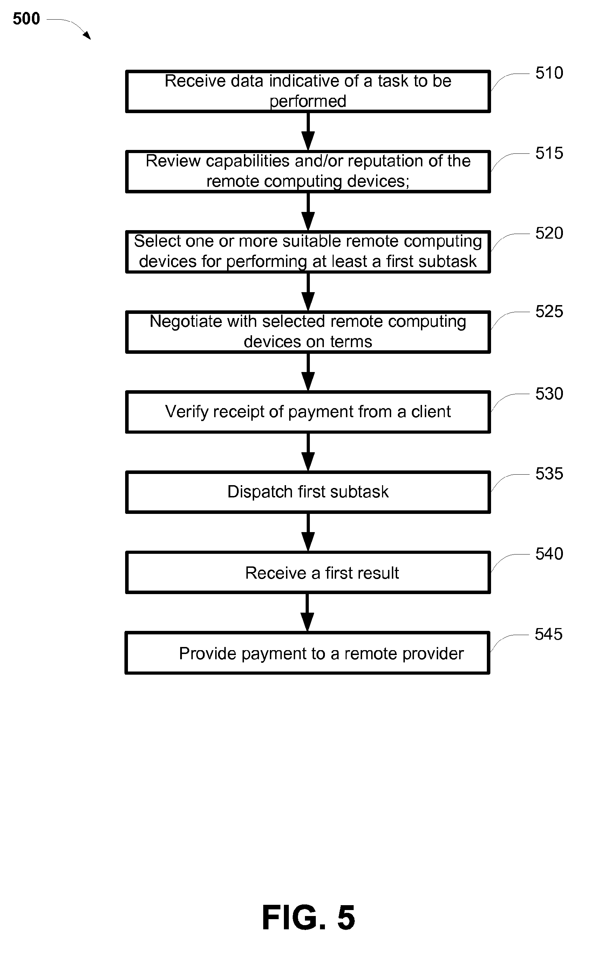

Referring to FIG. 5, an embodiment method can comprise the steps of:
STEP 510: receiving, from a client computing device, data indicative of a task to be performed;
STEP 515: reviewing capabilities and/or reputation of the remote computing devices;
STEP 520: selecting one or more suitable remote computing devices for performing at least a first subtask;
STEP 525: negotiating, and reaching agreement, with selected remote computing devices on terms for performing the first subtask;
STEP 530: verifying receipt of payment from a client (associated with the client computing device);
STEP 535: dispatching first subtask (typically as a plurality subtasks);
STEP 540: receiving a first result, from respective remote computing device; and
STEP 545: providing payment to a remote provider (associated with the remote computer device).

In this example embodiment, selecting suitable remote computing devices includes comparing a measure considered indicative of their reputation. This measure is updated upon each completion of a subtask.

A measure indicative of qualification and/or reputation can be obtained for suitable remote computing devices, and used in selecting a first remote computing device to perform a task or subtask.

This measure indicative of qualification and/or reputation can be maintained (and/or stored) in a database by the service computing device, for each remote computing device. Recording and tracking of a measure indicative of qualification and/or reputation of a remote computing device can be maintained in respect of past performance of tasks and/or subtasks.

Selecting a first remote computing device can include ranking suitable remote computing devices on the basis of a measure of reputation. When a remote computing device completes a task and/or a subtask, a respective measure of reputation can be updated. The measure of reputations can, by way of example only, be calculated from any one or more of the set comprising:
➢ accuracy rate;
➢ completion rate;
➢ acceptance rate; and
➢ client feedback rating.

In this example embodiment, results are typically verified before providing payment to the remote service provider. Verification is typically determined by a verification routine (or module). The verification routine can be provided by a respective client or operates on validity data provided by a client.

It will be appreciated that, a verification routine can be executed by the service computing device, remote computing device or client computing device. The verification routine can further provide feedback for updating a measure indicative of reputation for a respective remote computing device.

A verification routine can be run on a subresult to verify if it achieves an acceptable threshold for its correctness in satisfying the terms of a subtask. Typically, the verification routine calculates a measure indicative of correctness in satisfying satisfying negotiated terms of the subtask.

A verification routine may employ probabilistic techniques in calculating a measure indicative of correctness. Alternatively, the verification routine may be a null routine. Feedback data from the verification routine can be used to update the reputation measure indicative of the respective remote computing device.

Upon verification of a subresult, payment is typically released to a remote service provider associated with that subresult (and subtask).

In this example embodiment, payment is typically received from a client before negotiating, and reaching agreement, with selected remote computing devices. Preferably, pre-payment is received from the client for maintaining a client account in credit.

Before dispatching a task, a payment is provided from the client. Typically this occurs after negotiating terms, but before accepting terms. This payment can be sufficient to cover payment of: a total fee associated with the task, a partial fee associated with the task, or one or more micro-payment being a partial payment of a total fee associated with the first subtask. This payment is preferably provided to the service provider (associated with the service computing device) prior to dispatching a task. Verification of payment is preferably required prior to dispatching a task (or sub task).

A client typically provides pre-payment, in the form of a controlled payment or an escrow payment. The amount of pre-payment is typically at least enough to pay a first fee associated with the first sub result. Payment is typically only provided to a remote service provider (associated with the remote computing device), upon verifying any received results.

It will be appreciated that, in an embodiment, a client device is not exposed to (or provided details on) the remote computing devices. The service computing device is adapted to negotiate with a plurality of remote computing devices, on behalf of the client (or client computing device), to perform a task comprising one or more subtasks for a fee. The client need not know of the remote providers (or remote computing devices). In an embodiment, by way of example only, a client computing device can be associated with managing a website that publishes internet (or world wide web) advertisements. These advertisements are generated by a software module on the client computing device.

To improve advertisements published, a service computing device can be requested to complete a task of providing new software module that generates improved advertisements. Verification can be assessed on the basis of one or more verifiable indicators, for example by measuring advertisement effectiveness.

Alternatively, to improve advertisements published, service computing device can be requested to complete a task of preparing new copy-text for an advertisement. Verification can be assessed on the basis of one or more verifiable indicators. The remote computing device may perform data mining and/or provide improved advertisement copy-text for a product or service. The proposed copy-text can be provided to the service computing device for verification. Verification may include the client computing device trialling an advertisement for a predetermined period of time, with the proposed copy-text, to confirm that target terms are satisfied.

It will be appreciated that, in an embodiment, the remote computing devices can automatically negotiate and accept terms for completing a task, provide results (or sub results), and receive payment.

### Interpretation

Unless specifically stated otherwise, as apparent from the following discussions, it is appreciated that throughout the specification discussions utilizing terms such as "processing", "computing", "calculating", "determining" or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "processing system", or equivalently: "computer", "computing machine" or a "computing platform" may include one or more processors.

Thus, one example is a typical processing system that includes one or more processors. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., an liquid crystal display (LCD) or a cathode ray tube (CRT) display. If manual data entry is required, the processing system also includes an input device such as one or more of an alphanumeric input unit such as a keyboard, a pointing control device such as a mouse, and so forth. The term memory unit as used herein, if clear from the context and unless explicitly stated otherwise, also encompasses a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one of more of the methods described herein.

In alternative embodiments, the one or more processors operate as a standalone device or may be connected, e.g., networked to other processor(s), in a networked deployment, the one or more processors may operate in the capacity of a server or a client machine in server-client network environment, or as a peer machine in a peer-to-peer or distributed network environment. The one or more processors may form a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine.

Note that while some diagrams only show a single processor and a single memory that carries the computer-readable code, those in the art will understand that many of the components described above are included, but not explicitly shown or described in order not to obscure the inventive aspect. For example, while only a single processor "processing system" is illustrated, the term "processing system" shall also be taken to include any collection of processors that individually or jointly execute a set (or multiple sets) of instructions to perform any one or more of the methodologies discussed herein.

It will be appreciated that, the description uses terminology commonly employed by those skilled in the art to convey the substance of their work to others skilled in the art, such as node, server, client, and so forth. As well understood by those skilled in the art, this terminology is merely logical in nature to facilitate explanation of the present invention. The description is also presented in terms of operations performed by a computer system, using terms such as network, text, data and the like. As well understood by those skilled in the art also, these quantities take the form of electrical, magnetic, or optical signals capable of being stored, transferred, combined, and otherwise manipulated through mechanical and electrical components of a digital system; and the term digital system includes general purpose as well as special purpose data processing machines, systems, and the like, that are standalone, adjunct or embedded.

Methodologies described herein are, in one embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. A computer-readable carrier medium may form, or be included in, a computer program product. The computer readable medium comprises computer code for executing a method as herein described. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code.

Thus, one embodiment of each of the methods described herein is in the form of a computer-readable carrier medium carrying a set of instructions, e.g., a computer program that are for execution on one or more processors, e.g., one or more processors that are part of whatever the device is. Thus, as will be appreciated by those skilled in the art, embodiments of the present invention may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code embodied in the medium.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

Furthermore, some of the embodiments are described herein as a method or combination of elements of a method that can be implemented by a processor of a processing system (or computer) or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

The software (or computer program) may further be transmitted or received over a network via a network interface device. While the carrier medium is shown in an exemplary embodiment to be a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present invention. A carrier medium may take many forms, including but not limited to, non-volatile media, volatile media, and transmission media. Non-volatile media includes, for example, optical, magnetic disks, and magnetooptical disks. Volatile media includes dynamic memory, such as main memory. Transmission media includes coaxial cables, copper wire and fiber optics, including the wires that comprise a bus subsystem. Transmission media also may also take the form of acoustic or light waves, such as those generated during radio wave and infrared data communications. For example, the term "carrier medium" shall accordingly be taken to included, but not be limited to, solid-state memories, a computer product embodied in optical and magnetic media, a medium bearing a propagated signal detectable by at least one processor of one or more processors and representing a set of instructions that when executed implement a method, a carrier wave bearing a propagated signal detectable by at least one processor of the one or more processors and representing the set of instructions a propagated signal and representing the set of instructions, and a transmission medium in a network bearing a propagated signal detectable by at least one processor of the one or more processors and representing the set of instructions.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, any claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Thus, while there has been described what are believed to be the preferred embodiments of the invention, those skilled in the art will recognize that other and further modifications may be made thereto without departing from the spirit of the invention, and it is intended to claim all such changes and modifications as fall within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

Unless specifically stated otherwise, as apparent from the following discussions, it is appreciated that throughout the specification discussions utilizing terms such as verify, verified, verifying, verifies and verification, can similarly be applied to authenticate, authenticated, authenticating, authenticates, and authentication.

Any one of the terms "comprising", "comprised of" or "which comprises" is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

Similarly, it is to be noticed that the term "coupled", when used in the claims, should not be interpreted as being limitative to direct connections only. The terms "coupled" and "connected", along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

As used herein, unless otherwise specified, the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

Although the invention has been described with reference to specific examples, it will be appreciated by those skilled in the art that the invention may be embodied in many other forms.

## Claims

1. A method for a service computing device to engage, on behalf of a client computing device, one or more remote computing devices to perform at least one client directed task for a fee, the method comprising the steps of:
(a) receiving, from a client computing device, data indicative of at least one tasks to be performed;
(b) reviewing capabilities of the remote computing devices;
(c) selecting one or more suitable remote computing devices for performing at least a first subtask;
(d) receiving payment from a client, being associated with the client computing device;
(e) dispatching the first subtask;
(f) receiving a first result, from respective remote computing device; and
(g) providing payment to a remote provider, being associated with the remote computer device.

2. The method according to claim 1, the method further comprising the steps of:
negotiating, and reaching agreement, with selected remote computing devices on terms for performing the first subtask.

3. The method according to claim 2, wherein the step of negotiating and reaching agreement is conducted prior to receiving data indicative of a task to be performed, wherein this advance negotiation pre-establishes a set fee in respect of at least a subtask.

4. The method according to any one of the preceding claims, the method further comprising the steps of:
receiving, from a client computing device, a selection of a first remote computing device from the one or more suitable remote computing devices to performing first sub task; and receiving, from a client computing device, authorization for dispatching the first sub-task to the first remote computing device; wherein the first sub-task being dispatched to the first remote computing device.

5. The method according to any one of the preceding claims, wherein reviewing capabilities of the remote computing devices includes reviewing reputation of the remote computing device by interrogating a local reputation database.

6. The method according to any one of the preceding claims, wherein reviewing capabilities of the remote computing devices includes reviewing reputation of the remote computing device by interrogating a remote reputation database.

7. The method according to any one of the preceding claims, wherein reviewing capabilities of the remote computing devices includes reviewing reputation of the remote computing device by interrogating a predefined application program interface.

8. The method according to any one of the preceding claims, wherein an initial deposit payment is received from the client before receiving data indicative of a task to be performed.

9. The method according to any one of the preceding claims, wherein selecting suitable remote computing devices includes comparing a measure indicative of reputation.

10. The method according to claim 9, wherein the measure indicative of reputation is updated upon each completion of a subtask.

11. The method according to any one of the preceding claims, wherein results are verified before providing payment.

12. The method according to any one of the preceding claims, wherein a verification routine provides feedback for updating a measure indicative of reputation of a respective remote computing device.

13. The method according to any one of the preceding claims, further including the step of generating a result for the task based, at least in part, on the first subresult.

14. An apparatus comprising a service computing device adapted to engage one or more remote computing devices to perform selected sub-tasks for payment, the service computing device comprising:
a storage medium having stored therein a plurality of programming instructions that are machine executable, wherein when executed, said instructions operate to:
(a) receive, from a client computing device, data indicative of a task to be performed;
(b) identify at least a first subtask of the task;
(c) identify one or more required capabilities for performance of the first subtask;
(d) select a first remote computing device, having the required capabilities for performing the first subtask;
(e) accept terms, with the first remote computing device, for performing the first subtask;
(f) dispatch the first subtask to the first remote computing device;
(g) receive a first subresult, generated by performance of the first subtask by first remote computing device;
(h) provide payment of a first fee to the first remote computing device for the performance of the first subtask; and
(i) generate a result for the task based, at least in part, on the first subresult.

15. An apparatus according to claim 14, wherein instructions operate to: negotiate terms, with the first remote computing device, for performing the first subtask.
